# EUROPEAN PATENT SPECIFICATION

(11) **EP 4 273 178 B1**
(45) Date of publication and mention of the grant of the patent: **30.04.2025**
(21) Application number: 22780477.0
(22) Date of filing: 24.03.2022
(51) Int. Cl.: C08F 36/18, C09J 11/04, C09J 11/06, C08K 5/098, C08L 11/02, C09J 111/02

(54) **CHLOROPRENE-BASED POLYMER LATEX, CHLOROPRENE-BASED POLYMER LATEX PRODUCTION METHOD, CHLOROPRENE-BASED POLYMER, ADHESIVE AGENT COMPOSITION, COMPOUND COMPOSITION, AND VULCANIZED MOLDED ARTICLE**
CHLOROPRENBASIERTES POLYMERLATEX, VERFAHREN ZUR HERSTELLUNG VON CHLOROPRENBASIERTEM POLYMERLATEX, HAFTMITTELZUSAMMENSETZUNG, VERBUNDZUSAMMENSETZUNG UND VULKANISIERTER FORMARTIKEL
LATEX DE POLYMÈRE DE CHLOROPRÈNE AINSI QUE PROCÉDÉ DE FABRICATION DE CELUI-CI, POLYMÈRE DE CHLOROPRÈNE, COMPOSITION D'ADHÉSIF, COMPOSITION COMPOSITE, ET CORPS MOULÉ VULCANISÉ

(30) Priority: 31.03.2021 JP 2021060716
(43) Date of publication of application: 08.11.2023
(73) Proprietor: Denka Company Limited, Tokyo 103-8338 (JP)
(72) Inventor: TOMIZAWA, Seiya, Tokyo 103-8338 (JP); NISHINO, Wataru, Tokyo 103-8338 (JP); TADA, Misaki, Tokyo 103-8338 (JP)
(74) Representative: Gulde & Partner
(86) International application number: PCT/JP2022/014015
(87) International publication number: WO 2022/210263

(56) References cited:
- WO-A1-2017/221881
- JP-A- 2006 143 826
- JP-A- 2007 177 198
- JP-A- 2009 155 535
- JP-A- 2015 048 449
- JP-A- H08 269 116
- JP-A- S58 219 206
- US-A1- 2002 120 045
- US-A1- 2014 350 190

## Description

### TECHNICAL FIELD

The present invention relates to a chloroprene-based polymer latex, a chloroprene-based polymer, an adhesive composition, a compound composition, a vulcanized molded body, and a method of producing these.

### BACKGROUND ART

A chloroprene-based rubber is used in various applications because of its excellent heat resistance, weather resistance, ozone resistance, chemical resistance, flame resistance and the like. A solvent-type adhesive is one of the representative examples and used in various applications due to their wide adaptability to adherends and well-balanced adhesive properties.

In recent years, it has been desired to change the solvent used for the solvent-type adhesive to a non-aromatic solvent. However, with this change, during storage of the solvent-type adhesive, so-called layer separation, in which the solvent-type adhesive separates into components that are soluble in the organic solvent and components that are insoluble in the organic solvent, tends to occur.

As a technique related to a composition containing a chloroprene-based polymer with excellent layer separation stability, JP 2007-177198 A discloses that a specific ethylenically unsaturated sulfonic acid or a salt thereof is copolymerized in a specific range when chloroprene is polymerized.

Further, JP 2010-275338 A discloses a chloroprene rubber composition containing 0.005 to 10 parts by mass of at least one sulfonic acid compound having a specific structure with respect to 100 parts by mass of the chloroprene rubber. Further examples may be found in US 2002/120045 A1, US 2014/350190 A1 and WO 2017/221881 A1.

### SUMMARY OF INVENTION

### TECHNICAL PROBLEM

However, conventional chloroprene-based polymer latexes have the problem that the generation of aggregates during and after the polymerization reaction cannot be reduced, and an adhesive composition that does not cause layer separation for a long period of time cannot be obtained.

The present invention has been made in view of such circumstances, and provides a chloroprene-based polymer latex, and a chloroprene-based polymer, which can obtain an adhesive composition that generates less aggregates during and after the polymerization reaction and does not cause layer separation for a long period of time, and an adhesive composition, a compound composition, and a vulcanized molded body containing such the chloroprene-based polymer latex or the chloroprene-based polymer, and a method for producing these.

### SOLUTION TO PROBLEM

According to the present invention, a chloroprene-based polymer latex comprising a chloroprene-based polymer, wherein:
an amount of substance of alkali metal cation per unit mass in the chloroprene-based polymer latex is 0.12 to 0.25 mmol/g, and
when the chloroprene-based polymer latex is freeze-dried to obtain a solid content containing the chloroprene-based polymer, and an ethanol-toluene azeotropic mixture soluble content specified in JIS K 6229 is extracted by refluxing from the solid content to obtain an extract, and the obtained extract is acid treated with hydrochloric acid, an amount of rosin acid of in the solid content measured by gas chromatography is 1.4 to 3.2% by mass with respect to 100% by mass of the chloroprene-based polymer in the solid content,
is provided. Further, the 1H-NMR spectrum of the chloroprene-based polymer measured in a deuterochloroform solvent does not have a peak at 4.15 to 4.20 ppm; or
the 1H-NMR spectrum of the chloroprene-based polymer measured in the deuterochloroform solvent has a peak at 4.15 to 4.20 ppm and, when an area of the peak at 4.15 to 4.20 ppm is C and the area of the peak at 4.05 to 6.10 ppm is B, C/B is less than 0.10/100.

The present inventors have made intensive studies and found that by setting the amount of alkali metal cation and the amount of rosin acid contained in the chloroprene-based polymer latex within a specific numerical range, a chloroprene-based polymer latex, which can obtain an adhesive composition that generates less aggregates during and after the polymerization reaction and does not cause layer separation for a long period of time, can be obtained, and completing the present invention.

Various embodiments of the present invention are illustrated below. The embodiments shown below can be combined with each other.

According to another embodiment of the present invention, a method of producing the chloroprene-based polymer latex described above,
the method comprising an emulsion polymerization step,
   in the emulsion polymerization step, a monomer including chloroprene monomer is emulsified and polymerized,
   1.2 to 2.2 parts by mass of rosin acid salt are used with respect to 100 parts by mass of a total of chloroprene monomer and monomer copolymerizable with chloroprene, and
   0.5 to 1.1 parts by mass of a total of sodium hydroxide and potassium hydroxide is used with respect to 100 parts by mass of aqueous medium,
is provided.

According to another embodiment of the present invention, the chloroprene-based polymer obtained by drying up the chloroprene-based polymer latex described above, is provided.

According to another embodiment of the present invention, an adhesive composition comprising the chloroprene-based polymer latex described above, or the chloroprene-based polymer described above, is provided.

According to another embodiment of the present invention, a vulcanized molded body comprising the compound composition described above, is provided.

### EFFECTS OF THE INVENTION

According to the chloroprene-based polymer latex, an adhesive composition that generates less aggregates during and after the polymerization reaction and does not cause layer separation for a long period of time can be obtained.

### DESCRIPTION OF EMBODIMENTS

Hereinafter, the present invention will be described in detail by exemplifying embodiments of the present invention.

### 1. Chloroprene-based Polymer Latex

The chloroprene-based polymer latex of the present invention contains the chloroprene-based polymer described above, and the amount of substance of alkali metal cation in the chloroprene-based polymer latex and the amount of rosin acid contained in the chloroprene-based polymer are within a specific numerical range.

### 1.1 Alkali Metal Cation

In the chloroprene-based polymer latex according to the present invention, the amount of substance of alkali metal cation per unit in the chloroprene-based polymer latex is preferably 0.12 to 0.25 mmol/g. The amount of substance of alkali metal cation can be, for example, 0.12, 0.13, 0.14, 0.15, 0.16, 0.17, 0.18, 0.19, 0.20, 0.21, 0.22, 0.23, 0.24, 0.25 mmol/g, and may be in the range between the two values exemplified herein. The amount of substance of alkali metal cation in the chloroprene-based polymer latex is analyzed by an inductively coupled plasma atomic emission spectrometer after the chloroprene-based polymer latex is acid-decomposed with sulfuric acid and nitric acid and the like, and acidified with hydrochloric acid. Specifically, it can be determined by the method described in Examples.

The alkali metal cation in one embodiment of the invention is preferably potassium and sodium ion.

### 1.2 Rosin Acid

When the chloroprene-based polymer latex according to the present invention is freeze-dried to obtain a solid content containing the chloroprene-based polymer, and an ethanol-toluene azeotropic mixture soluble content specified in JIS K 6229 is extracted by refluxing from the solid content to obtain an extract, and the obtained extract is acid treated with hydrochloric acid, an amount of rosin acid of in the solid content measured by gas chromatography is preferably 1.4 to 3.2% by mass with respect to 100% by mass of the chloroprene-based polymer. The amount of rosin acid in the solid content containing chloroprene-based polymer can be, for example, 1.4, 1.5, 1.6, 1.7, 1.8, 1.9, 2.0, 2.1, 2 .2, 2.3, 2.4, 2.5, 2.6, 2.7, 2.8, 2.9, 3.0, 3.1, 3.2% by mass, and may be in the range between the two values exemplified herein.

The amount of rosin acid in the solid content containing the chloroprene-based polymer is obtained by freeze-drying the chloroprene-based polymer latex to obtain a solid content containing the chloroprene-based polymer, extracting rosin acid from the solid content with an ethanol-toluene azeotropic mixture (ethanol/toluene volume ratio 7/3 (ETA)) and measuring by gas chromatography. Specifically, it can be determined by the method described in Examples.

Examples of the rosin acid according to one embodiment of the present invention include a single component or a mixture of resin acids such as abietic acid, dehydroabietic acid, dihydroabietic acid, pimaric acid, dihydropimaric acid, isopimaric acid, and secodehydroabietic acid.

By setting the amount of alkali metal cation and the amount of rosin acid within the above specific numerical range, the chloroprene-based polymer latex can obtain an adhesive composition that generates less aggregates during and after the polymerization reaction and does not cause layer separation for a long period of time.

Moreover, the chloroprene-based polymer latex according to one embodiment of the present invention satisfies the following condition 1.

Condition 1: The above amount of substance of the alkali metal cation is 0.12 to 0.25 mmol/g, and the above amount of rosin acid is 1.4 to 3.2% by mass.

In the chloroprene-based polymer latex according to one embodiment of the present invention by satisfying the above Condition 1 and highly controlling the amount of alkali metal cation and the amount of rosin acid, the resulting chloroprene-based polymer latex can provide an adhesive composition that generates less aggregates during and after the polymerization reaction and does not cause layer separation for a long period of time and can provide an adhesive composition that has a long pot life.

In Condition 1, the amount of substance of alkali metal cation is more preferably 0.13 mmol/g or more, and even more preferably 0.14 mmol/g or more. The amount of substance of alkali metal cation is, for example, 0.12, 0.13, 0.14, 0.15, 0.16, 0.17, 0.18, 0.19, 0.20, 0.21, 0.22, 0.23, 0.24, 0.25 mmol/g, and may be in the range between the two values exemplified herein. In Condition 1, the amount of rosin acid is, for example, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2% by mass, and may be in the range between the two values exemplified herein.

### 1.3 Chloroprene-Based Polymer

The chloroprene-based polymer according to the present invention is a homopolymer of 2-chloro-1,3-butadiene (hereinafter referred to as chloroprene), or a copolymer of chloroprene monomer and another monomer copolymerizable with chloroprene.

Examples of the monomer copolymerizable with chloroprene monomer include 2,3-dichloro-1,3-butadiene, 1-chloro-1,3-butadiene, butadiene, isoprene, styrene, acrylonitrile, acrylic acid or esters thereof, methacrylic acid, esters thereof, and the like. These can be used alone, or two or more of these can be used in combination. Although it is not particularly limited, from the viewpoint of maintaining the properties derived from chloroprene, the chloroprene-based polymer according to one embodiment of the present invention preferably has 70% by mass or more, more preferably 80% by mass or more, and even more preferably 90% by mass or more of the monomer units derived from chloroprene with respect to 100% by mass of the chloroprene-based polymer.

The 1H-NMR spectrum of the chloroprene-based polymer according to one embodiment of the present invention measured in a deuterochloroform solvent may not have a peak at 4.15 to 4.20 ppm. Or the 1H-NMR spectrum of the chloroprene-based polymer according to one embodiment of the present invention measured in the deuterochloroform solvent may have a peak at 4.15 to 4.20 ppm. In the case that it has a peak at 4.15 to 4.20 ppm, in the chloroprene-based polymer according to one embodiment of the present invention, when an area of the peak at 4.15 to 4.20 ppm is C and the area of the peak at 4.05 to 6.10 ppm is B, C/B is preferably less than 0.10/100, more preferably less than 0.08/100, and even more preferably less than 0.09/100. C/B may be, for example, 0.01, 0.02, 0.03, 0.04, 0.05, 0.06, 0.07, 0.08, 0.09/100, and may be in the range between the two values exemplified herein.

The chloroprene-based polymer is purified with benzene and methanol and freeze-dried to obtain a sample and the sample is dissolved in deuterochloroform. 1H-NMR spectrum is measured for a liquid dissolved in deuterochloroform. A peak position is based on the peak of chloroform in deuterochloroform (7.24 ppm).

C/B can be controlled by adjusting the production conditions of the chloroprene-based polymer, for example, adjusting the charged amounts of rosin acid salt and sodium hydroxide and potassium hydroxide during polymerization of the chloroprene-based polymer.

Further, in the chloroprene-based polymer according to one embodiment of the present invention, the amount of alkali metal cation contained in the chloroprene-based polymer latex and the amount of rosin acid contained in the chloroprene-based polymer are within a specific numerical range. Furthermore, the 1H-NMR spectrum of the chloroprene-based polymer measured in a deuterochloroform solvent does not have a peak at 4.15 to 4.20 ppm, or C/B is less than the upper limit described above. Thereby, the resulting chloroprene-based polymer latex may provide an adhesive composition that generates less aggregates during and after the polymerization reaction, does not cause layer separation for a long period of time, and has a long pot life.

The peak appearing at 4.15 to 4.20 ppm in the 1H-NMR spectrum is presumed to be related to 1,2-OH rearrangement structure represented by the following formula. In the chloroprene-based polymer latex according to one embodiment of the present invention, since the peak area ratio related to the above structure is less than the above upper limit, the cross-linking reaction of the chloroprene-based polymer is suppressed, it is considered that the resulting chloroprene-based polymer latex may provide an adhesive composition that generates less aggregates during and after the polymerization reaction, does not cause layer separation for a long period of time, and have a long pot life.

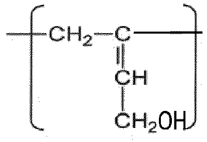

A 1H-NMR spectrum of the chloroprene-based polymer according to one embodiment of the present invention measured in a deuterochloroform solvent preferably has a peak at 5.80 to 6.00 ppm. In the chloroprene-based polymer according to one embodiment of the present invention, when an area of the peak at 5.80 to 6.00 ppm is A and an area of a peak at 4.05 to 6.10 ppm is B, A/B is preferably 1.18/100 or more, more preferably 1.20/100 or more. A/B may be, for example, 1.18, 1.19, 1.20, 1.21, 1.22, 1.23, 1.24, 1.25, 1.26, 1.27, 1.28, 1.29, 1.30, 1.31, 1.32, 1.33, 1.34, 1.35/100, and may be in the range between the two values exemplified herein.

The 1H-NMR spectrum of the chloroprene-based polymer according to one embodiment of the present invention measured in a deuterochloroform solvent preferably has a peak at 5.40 to 5.60 ppm.

In the chloroprene-based polymer according to one embodiment of the present invention, when an area of the peak at 5.40 to 5.60 ppm is D and the area of the peak at 4.05 to 6.10 ppm is B, D/B is preferably 97.20/100 or less, more preferably 97.18/100 or less, and even more preferably 97.15/100 or less. D/B is, for example, 97.00, 97.01, 97.02, 97.03, 97.04, 97.05, 97.06, 97.07, 97.08, 97.09, 97.10, 97.11, 97.12, 97.13, 97.14, 97.15, 97.16, 97.17, 97.18, 97.19, 9 7.20/100, and may be in the range between the two values exemplified herein.

The peak appearing at 5.80 to 6.00 ppm in the 1H-NMR spectrum is presumed to be related to a structure represented by the following formula.

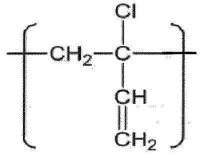

Also, the peak appearing at 5.40 to 5.60 ppm in the 1H-NMR spectrum is presumed to be related to a structure represented by the following formula.

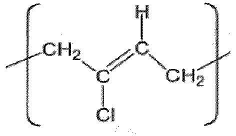

In the chloroprene-based polymer latex according to one embodiment of the present invention, by setting the peak area ratio related to the above structure in the chloroprene-based polymer within the above numerical range, it is considered that the resulting chloroprene-based polymer latex may provide an adhesive composition that generates less aggregates during and after the polymerization reaction, does not cause layer separation for a longer period of time, and has a longer pot life.

In addition, the chloroprene-based polymer latex according to one embodiment of the present invention may contain a freeze stabilizer, an emulsion stabilizer, a viscosity modifier, an antioxidant, a preservative, and the like within a range that does not impair the effects of the present invention.

In the chloroprene-based polymer latex according to one embodiment of the present invention, when the chloroprene-based polymer contained in the chloroprene-based polymer latex is 100% by mass, the content of the emulsifier other than the emulsifier containing rosin acid may be 1% by mass or less and 0.5% by mass or less. Examples of emulsifiers other than the emulsifier containing rosin acid include metal salts of aromatic sulfonic acid formalin condensate, sodium dodecylbenzenesulfonate, potassium dodecylbenzenesulfonate, sodium alkyldiphenylethersulfonate, potassium alkyldiphenylethersulfonate, sodium poly oxyethylene alkyl ether sulfonate, sodium polyoxypropylene alkyl ether sulfonate, potassium polyoxyethylene alkyl ether sulfonate, potassium polyoxypropylene alkyl ether sulfonate and the like. In the chloroprene-based polymer latex according to one embodiment of the present invention, the content of the metal salt of the aromatic sulfonic acid formalin condensate, for example, the content of the naphthalene sulfonic acid formalin condensate can be 1% by mass or less and 0.5% by mass or less.

In the chloroprene-based polymer latex according to one embodiment of the present invention, the amount of aggregates generated from the start to the end of the polymerization reaction, (that is, the amount of aggregates in the polymerization liquid after the polymerization reaction is completed) is preferably less than 1% by mass with respect to 100% by mass of the chloroprene-based polymer. Here, "aggregate" can be evaluated by using the total of the dry weight of the residue when the polymerization liquid is filtered through a wire mesh of 80 mesh, and the dry weight of deposits collected from the reactor wall surface, with respect to 100% by mass of the chloroprene-based polymer.

### 2. Method for Producing Chloroprene-based Polymer Latex

The method for producing the chloroprene-based polymer latex according to the present invention is not particularly limited. It can be obtained by a method of producing including an emulsion polymerization step in which a monomer including chloroprene monomer is emulsified and polymerized. In the emulsion polymerization step according to one embodiment of the present invention, chloroprene monomer, or chloroprene monomer and other monomer copolymerizable with chloroprene monomer are emulsified and polymerized by using an emulsifiers, an dispersing agent, a catalyst, a chain transfer agent, and the like as appropriate, and when the desired polymerization rate is reached, a polymerization terminator may be added to obtain the chloroprene-based polymer latex. Unreacted monomer can be removed from the chloroprene-based polymer latex obtained in this way by steam flash method, concentration method, and the like.

### <Monomer>

The monomer containing chloroprene monomer include chloroprene monomer and other monomers copolymerizable with chloroprene monomer described above.

### <Rosin Acid Salt>

In the emulsion polymerization step of one embodiment of the present invention, it is preferable to use 1.2 to 3.0 parts by mass of rosin acid salt with respect to 100 parts by mass of the total of chloroprene monomer and monomer copolymerizable with chloroprene.

The amount of rosin acid salt used can be, for example, 1.2, 1.3, 1.4, 1.5, 1.6, 1.7, 1.8, 1.9, 2.0, 2.1, 2.2 parts by mass, and may be in the range between the two values exemplified herein.

Examples of the rosin acid salt include, for example, alkali metal salts such as sodium and potassium, alkaline earth metal salts such as calcium, and ammonium salts. Preferably, sodium and potassium salts may be used from the viewpoint of ease of handling, and the like. Examples of the rosin acid included in the rosin salt include the rosin acid exemplified above.

In the emulsion polymerization step of one embodiment of the present invention, rosin acid may be used in combination. When rosin acid is used, the amount of rosin acid used may be, for example, 0.1, 0.2, 0.3, 0.4, 0.5 parts by mass, and may be in the range between the two values exemplified herein.

### <Other Emulsifier and Dispersant>

In the method of producing according to one embodiment of the present invention, other emulsifiers may be used together, if necessary, for the purpose of stabilizing the control of the polymerization reaction, and the like. Examples of the other emulsifier and dispersant include, for example, the compounds listed above as the emulsifier other than emulsifier containing rosin acid. In the method of producing for one embodiment of the present invention, the amount of the emulsifier other than the emulsifier containing rosin acid can be 1 parts or less by mass, and 0.5 parts or less with respect to 100 parts by mass of the total of chloroprene monomer and monomer copolymerizable with chloroprene.

### <Potassium Hydroxide and Sodium Hydroxide>

In the emulsion polymerization step of one embodiment of the present invention, 0.5 to 1.1 parts by mass of a total of sodium hydroxide and potassium hydroxide is preferably used with respect to 100 parts by mass of aqueous medium.

The total amount of sodium hydroxide and potassium hydroxide can be, for example, 0.5, 0.6, 0.7, 0.8, 0.9, 1.0, 1.1 parts by mass, and may be in the range between the two values exemplified herein.

As the aqueous medium, especially pure water is preferred.

The method of producing according to the present invention satisfies Condition 3 below.

Condition 3: In the emulsion polymerization step, 1.2 to 2.2 parts by mass of rosin acid salt are used with respect to 100 parts by mass of a total of chloroprene monomer and monomer copolymerizable with chloroprene, and

0.5 to 1.1 parts by mass of a total of sodium hydroxide and potassium hydroxide is used with respect to 100 parts by mass of aqueous medium.

In the chloroprene-based polymer latex according to one embodiment of the present invention, by satisfying the above Condition 3 and highly controlling the amount of alkali metal cation and the amount of rosin acid, the resulting chloroprene-based polymer latex can provide an adhesive composition that generates less aggregates during and after the polymerization reaction and does not cause layer separation for a long period of time and, furthermore, can provide an adhesive composition that has a long pot life.

In Condition 3, the amount of rosin acid salt can be, for example, 1.2, 1.3, 1.4, 1.5, 1.6, 1.7, 1.8, 1.9, 2.0, 2.1, 2.2 parts by mass with respect to 100 parts by mass of a total of chloroprene monomer and monomer copolymerizable with chloroprene and may be in the range between the two values exemplified herein. The total of sodium hydroxide and potassium hydroxide is preferably more than 0.5 parts by mass with respect to 100 parts by mass of aqueous medium. It may be 0.5, 0.6, 0.7, 0.8, 0.9, 1.0, 1.1 parts by mass and may be in the range between the two values exemplified herein.

### <Polymerization Initiator>

Examples of the polymerization initiator used can include potassium persulfate, benzoyl peroxide, ammonium persulfate, hydrogen peroxide, and the like, which can be used in ordinary radical polymerization.

### <Chain Transfer Agent>

Examples of the chain transfer agent used can include known chain transfer agents, for example, long-chain alkyl mercaptans such as n-dodecyl mercaptan, tert-dodecyl mercaptan, n-octyl mercaptan, dialkyl xanthogen disulfides such as diisopropyl xanthogen disulfide and diethyl xanthogen disulfide, and iodoform.

### <Polymerization Temperature>

The polymerization temperature is preferably in the range of 0 to 55°C from the viewpoint of easy control of reaction. From the viewpoint of smoother and safer polymerization reaction, it is desirable to set the lower limit and upper limit of the polymerization temperature to 10°C or higher and 45°C or lower, respectively.

### <Polymerization Conversion Rate>

The polymerization conversion ratio can be in the range of 60 to 95%. The polymerization reaction can be stopped by adding a polymerization terminator. By setting the polymerization conversion rate within the above numerical range, decrease in adhesive strength and gel formation can be suppressed.

### <Polymerization Terminator >

Examples of the polymerization terminator include thiodiphenylamine, 4-tert-butyl catechol, 2,2'-methylenebis-4-methyl-6-tert-butylphenol, and the like. Unreacted monomer after emulsion polymerization can be removed by conventional methods such as vacuum distillation.

The method of producing the chloroprene-based polymer latex according to one embodiment of the present invention preferably does not include the step of heating at 140°C or higher for 1 hour or longer, and more preferably does not include the step of heating at 140°C or higher. Further, the method for producing the chloroprene-based polymer latex according to one embodiment of the present invention preferably does not include the step of heating at 55°C or higher for 3 hours or longer, and does not include the step of heating at 55°C or higher for 1 hour or longer.

According to method of producing according to one embodiment of the present invention, by adjusting the production conditions of the chloroprene-based polymer, for example, highly adjusting the charged amounts of rosin acid salt and sodium hydroxide and potassium hydroxide during polymerization of the chloroprene-based polymer, the microstructure of the chloroprene-based polymer can be more highly controlled even without the heating step, or even if the temperature of the heating step is lower or the time of the heating step is shorter than those of conventional method and the resulting chloroprene-based polymer latex may obtain an adhesive composition that does not cause layer separation for a longer period of time and has a longer pot life. According to the method of producing according to one embodiment of the present invention, by not having a heating step, or by lowering the temperature or shortening the time of the heating step than those of conventional method, the excessive increase of 1,2-OH rearrangement structure can be suppressed and it is considered that the resulting chloroprene-based polymer latex may provide an adhesive composition that does not cause layer separation for a longer period of time, and has a longer pot life can be obtained.

### 2. Chloroprene-Based Polymer

The chloroprene-based polymer of the present invention can be obtained by drying up of the chloroprene-based polymer latex described above. Drying up may be performed by known methods.

### 3. Adhesive Composition

An adhesive composition according to the present invention comprises the chloroprene-based polymer latex described above, or the chloroprene-based polymer described above.

The adhesive composition according to one embodiment of the present invention can contain an organic solvent in addition to the chloroprene-based polymer latex or chloroprene-based polymer described above. The type of organic solvent is not limited, and organic solvents such as toluene, xylene, acetone, methyl ethyl ketone, n-hexane, cyclohexane, methyl cyclohexane, cyclopentane, isopropyl acetate and ethyl acetate can be used.

As the organic solvents, non-aromatic solvents such as n-hexane, cyclohexane, methylcyclohexane, acetone, methyl ethyl ketone, ethyl acetate, and butyl acetate can be used instead of aromatic solvents such as toluene, xylene, and ethylbenzene, which are causative substances of sick building syndrome. It is more preferable to dissolve the chloroprene-based polymer latex or the chloroprene-based polymer only in a mixture of poor solvents that are poor in dissolving the chloroprene-based polymer latex alone.

The amount of the organic solvent used may be appropriately adjusted depending on the application and type of the adhesive, and is not particularly limited. It is preferable to adjust the viscosity of the adhesive composition to 3500 to 4500 mPa·S because the balance between the heat-resistant adhesive strength and the initial adhesive strength as an adhesive is improved.

In addition to solvents, adhesive compositions may contain metal oxides, tackifying resins, and antioxidants. By adding these additives to the adhesive, the initial adhesive strength, normal adhesive strength, and spray coatability of the resulting adhesive can be improved.

Examples of metal oxides include zinc oxide (zinc white), aluminum oxide, titanium oxide, and magnesium oxide and the like.

As the tackifying resin, for example, a phenolic resin, a rosin resin, a coumarone resin, a petroleum resin, and the like can be used.

Examples of antioxidants include 2,2'-methylenebis(4-ethyl-6-t-butylphenol), 2,2'-methylenebis(4-methyl-6-t-butylphenol), 2,6-di-t-butyl-4-methylphenol, pentaerythritol tetrakis [3-(3,5-di-t-butyl-4-hydroxyphenyl) propionate], thiodiethylenebis[3-(3,5-di-t-butyl-4-hydroxyphenyl)propionate], octadecyl-3-(3,5-di-t-butyl-4-hydroxyphenyl)propionate, N,N'-hexane-1,6-diylbis-3-(3,5-di-t-butyl-4-hydroxyphenylpropionamide), 3,5-bis(1,1-dimethylethyl)-4-hydroxyalkyl ester, diethyl [{3,5-bis(1,1-dimethylethyl)-4-hydroxyphenyl}methyl]phosphonate, 3,3 ' ,3 " ,5,5 ' 5 " -hexa-t-butyl-a,a ' ,a " -(mesitylene-2,4,6-triyl)tri-p-cresol, ethylenebis(oxyethylene)bis[3-(5-t-butyl-4-hydroxy-m-tolyl)propionate], tetraethylthiuram disulfide, tetrabutylthiuram disulfide, tetramethylthiuram monosulfide, dibutylhydroxytoluene and the like.

The adhesive composition may further contain formaldehyde catchers, fillers, and the like, depending on desired physical properties.

Examples of the formaldehyde catcher include pyrrolidine, piperidine, piperazine, morpholine, melamine, dicyandiamide, urea, ethyleneurea, 4,5-dimethoxyethyleneurea, propyleneurea, 5-methylpropyleneurea, 5-hydroxypropyleneurea, 5-methoxypropylene urea, oxalyl urea (parabanic acid), hydrazobenzothiazole, semicarbazide, thiosemicarbazide. The formaldehyde catcher agent can trap formaldehyde, a harmful volatile substance. Examples of the fillers used include talc, calcium carbonate, clay, smectite, silica, hydrotalcite, mica, and the like.

For the purpose of improving light resistance, an ultraviolet absorber such as benzotriazole or a light stabilizer such as hindered amine may be added to the adhesive composition.

The adhesive composition of the present embodiment also may contains at least one raw rubber selected from the group consisting of natural rubber, isoprene rubber, butyl rubber, nitrile rubber, hydrogenated nitrile rubber, butadiene rubber, styrene-butadiene rubber and ethylene-propylene rubber (uncrosslinked or unvulcanized rubber).

The method of producing the adhesive composition is not particularly limited, and known machines and devices may be used. As the method of producing an adhesive composition, in general, a method of dissolving an alkylphenol resin and magnesium oxide in an organic solvent, then allowing the solution stand at 25°C for 20 hours, and dissolving a mixture, which is obtained by kneading the chloroprene-based polymer (or the chloroprene-based polymer including the chloroprene-based polymer), a metal oxide, an antioxidant, and the like with a roll, in the solution is known.

Alternatively, the chloroprene-based polymer or chloroprene-based polymer latex can be directly dissolved and dispersed in an organic solvent together with metal oxides, antioxidants, and the like without kneading with a roll to obtain the adhesive composition.

The adhesive composition according to one embodiment of the present invention is used as a raw material for an adhesive. For example, an adhesive can be obtained by adding other additives to the adhesive composition or mixing the adhesive composition with another adhesive composition. Adhesives are preferably used for joining and adhering the same or different types of paper, wood, cloth, leather, rubber, plastic, foam, pottery, glass, mortar, cement-based materials, ceramics, metals, and the like.

In the adhesive composition according to one embodiment of the present invention, it is preferable that layer separation is not observed even after more than 20 days after preparation, and it is more preferable that layer separation is not observed even after more than 30 days. Moreover, the adhesive composition according to one embodiment of the present invention preferably has a pot life of 1000 minutes or longer, more preferably exceeding 1500 minutes. 4 parts by mass of an isocyanate-based curing agent is added to 100 parts by mass of the adhesive composition, and the viscosity after 10 minutes is taken as an initial viscosity. The pot life means the time required from the time when the initial viscosity is measured until the viscosity increases to 1.5 times the initial viscosity.

### 4. Compound Composition and Vulcanized Molded Body

A compound composition of the present invention includes the chloroprene-based polymer. A vulcanized molded body according to the present invention is made by vulcanizing the compound composition described above.

In addition to the chloroprene-based polymer described above, the compound composition of one embodiment of the present invention can include, for example, a vulcanizing agent, a vulcanization accelerator, fillers or a reinforcing agent, a plasticizer, a processing aid and a lubricant, an antioxidant, a silane coupling agent and the like.

### <Vulcanizing Agent>

The type of vulcanizing agent is not limited as long as it does not impair the effects of the present invention, and one or more of usual vulcanizing agents that can be used for chloroprene rubber may be freely selected. Examples of the vulcanizing agent include zinc oxide, magnesium oxide, lead oxide, trilead tetroxide, iron trioxide, titanium dioxide, calcium oxide, and hydrotalcite. The amount of the vulcanizing agent is also not limited. The compound composition of one embodiment of the present invention may have 3 to 15 parts by mass of the vulcanizing agent with respect to 100 parts by mass of the chloroprene-based polymer. When the added amount is within this range, processing safety is ensured and a good vulcanized molded body can be obtained.

### <Vulcanization Accelerator>

The compound composition according to one embodiment of the present invention can be further effectively vulcanized by using a vulcanization accelerator in combination with the vulcanization agent described above. The type of vulcanization accelerator that can be blended into the compound composition according to the present invention is not particularly limited as long as the effect of the present invention is not impaired, and one or more types of vulcanization accelerators commonly used for vulcanizing chloroprene rubber can be freely selected and used. Examples of the vulcanization accelerator include thiuram-based, dithiocarbamate-based, thiourea-based, guanidine-based, xanthogenate-based, thiazole-based, and the like, and these may be used alone, or two or more of these may be used in combination. Examples of the thiuram-based vulcanization accelerator include tetramethylthiuram disulfide, tetraethylthiuram disulfide, tetrabutylthiuram disulfide, tetrakis(2-ethylhexyl)thiuram disulfide, tetramethylthiuram monosulfide, and dipentamethylenethiuram tetrasulfide.

Examples of the dithiocarbamate-based vulcanization accelerator include sodium dibutyldithiocarbamate, zinc dimethyldithiocarbamate, zinc diethyldithiocarbamate, zinc n-ethyl-n-phenyldithiocarbamate, zinc n-pentamethylenedithiocarbamate, copper dimethyldithiocarbamate, ferric dimethyldithiocarbamate, tellurium diethyldithiocarbamate, and the like. In particular, zinc dibutyldithiocarbamate is preferably used.

Examples of the thiourea-based vulcanization accelerator include ethylene thiourea, N,N'-diethylthiourea, trimethylthiourea, and N,N'-diphenylthiourea.

Examples of the guanidine-based vulcanization accelerator include 1,3-diphenylguanidine, 1,3-di-o-tolylguanidine, 1-o-tolylbiguanide, di-o-tolylguanidine salt of dicatechol borate and the like.

Examples of the xanthate-based vulcanization accelerator include zinc butylxanthate, zinc isopropyl xanthate.

Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, 2-(4'-morpholinodithio)benzothiazole and the like.

In the compound composition according to one embodiment of the present invention, the amount of the vulcanization accelerator added is preferably 0.5 to 5 parts by mass with respect to 100 parts by mass of the chloroprene-based polymer.

### <Fillers or Reinforcing Agent>

Fillers or a reinforcing agent may be added to adjust the hardness of rubber and improve mechanical strength. Examples of them are not limited and include carbon black, silica, clay, talc, and calcium carbonate. These fillers may be used alone, or two or more of these may be used in combination.

The amount of these fillers and reinforcing agent may be adjusted according to the properties required for the rubber composition and the cross-linked or vulcanized rubber obtained from the rubber composition, and is not particularly limited. Normally 15 to 200 parts by mass in total of these may be added with respect to 100 parts by mass of the chloroprene-based polymer in the compound composition of the present embodiment.

### <Antioxidant>

A primary antioxidant is added mainly to suppress the decrease in hardness, elongation at break, and the like and to improve heat resistance when the obtained vulcanized molded body is heated. Examples include phenolic antioxidants, amine antioxidants, acrylate antioxidants, metal carbamates and waxes. These primary antioxidants may be used alone, or two or more of these may be used in combination. Among these compounds, amine antioxidant such as 4,4'-bis(α,α-dimethylbenzyl)diphenylamine, octylated diphenylamine, N-phenyl-N'-(1,3-dimethylbutyl)-p-phenylenediamine are preferred because they are effective in improving heat resistance.

The amount of primary antioxidant may be 0.1 to 10 parts by mass, preferably 1 to 5 parts by mass, with respect to 100 parts by mass of the chloroprene-based polymer contained in the compound composition. By setting the amount of the primary antioxidant in this range, the decrease in hardness, elongation at break, and the like of the resulting vulcanized molded body or compound can be suppressed and heat resistance can be improved.

The secondary antioxidant is added mainly to suppress the decrease in hardness, elongation at break, and compression set and the like and to improve heat resistance when the obtained vulcanized molded body is heated. Phosphorus-based antioxidants, sulfur-based antioxidants, and imidazole-based antioxidants can be mentioned. These secondary antioxidants may be used alone, or two or more of these may be used in combination. Among these compounds, the phosphorus-based antioxidant such as tris(nonylphenyl)phosphite and tris(2,4-di-t-butylphenyl)phosphite, the sulfur-based antioxidants such as dilarium thiodiopropionate, dimistyl-3,3'-thiodipropionate, and distearyl-3,3'-thiodipropionate, and the imidazole-based antioxidants such as 2-mercaptobenzimidazole and 1-benzyl-2-ethylimidazole are preferable because it has a large effect of improving heat resistance.

The amount of secondary aging antioxidant is 0.1 to 10 parts by mass, preferably 0.5 to 5 parts by mass, with respect to 100 parts by mass of the chloroprene-based polymer in the compound composition. By setting the amount of secondary antioxidant in this range, heat resistance can be improved.

### <Plasticizer>

The compound composition according to one embodiment of the present invention can contain a plasticizer. The plasticizer is not particularly limited as long as it is compatible with the chloroprene-based polymer. Examples include vegetable oils such as rapeseed oil, phthalate-based plasticizers, DUP (diundecyl phthalate), DOS (dioctyl sebacate), DOA (dioctyl adipate), ester plasticizers, ether ester plasticizers, thioether plasticizers, aromatic oils, naphthenic oils and the like. These may be used alone, or two or more of these may be used in combination. The amount of plasticizer blended may preferably 5 to 50 parts by mass with respect to 100 parts by mass of the chloroprene-based polymer.

### <Processing Aid>

The compound composition according to one embodiment of the present invention can contain a processing aid. The processing aid is mainly added to improve processing characteristics, such as to make the compound composition easier to peel off from rolls, molds, extruder screws, and the like. Examples of the processing aid include fatty acids such as stearic acid or paraffinic processing aids such as polyethylene. Processing aids include fatty acids such as stearic acid and paraffinic processing aids such as polyethylene. It is preferable to add 0.1 to 5 parts by mass to 100 parts by mass of the chloroprene-based polymer.

### <Method of Producing Compound Composition>

The compound composition according to one embodiment of the present invention is obtained by kneading the chloroprene-based polymer or chloroprene-based polymer latex and other required components at a temperature below the vulcanization temperature. As device for kneading the raw material components, conventionally a known mixer, banbury mixer, kneader mixer, open roll, and other kneading device can be used.

### <Vulcanized Molded Body>

The vulcanized molded body according to one embodiment of the present invention is a vulcanized molded body obtained by vulcanizing the above compound composition. The above compound composition may be molded into various desired shapes and then vulcanized, or the compound composition may be made into vulcanized rubber in advance and then molded into various shapes. Conventional methods of molding the compound composition and vulcanized rubber include conventional press molding, extrusion molding, and calender molding. The methods used in the normal rubber industry may be employed.

The method of vulcanizing the compound composition is not particularly limited. A vulcanized rubber can be obtained by general steam vulcanization or UHF vulcanization. Steam vulcanization is a means of vulcanizing an unvulcanized compound composition by applying pressure and temperature with steam gas as a heating medium, and UHF vulcanization is a method of vulcanizing the compound composition by irradiating it with microwaves. Further, during press vulcanization or injection molding, the compound composition may be vulcanized by raising the mold temperature to the vulcanization temperature while holding the compound composition inside the mold. The vulcanization temperature can be appropriately set according to the formulation of the compound composition and the type of the vulcanizing agent. Generally, 140 to 220°C is preferred, and a range of 150 to 180°C is more preferred. Vulcanization time can be, for example, 10 to 30 minutes. The vulcanized rubber is particularly suitable for use in compounds, belts, parts for overhead vehicles, seismic isolation rubber, hoses, wipers, immersion products, sealing parts, boots, rubber-coated fabrics, rubber rolls or sponge products.

### EXAMPLES

The invention is described in more detail below based on Examples, but the invention is not to be construed as limited thereto. Examples 1-4 are according to the invention. Examples 5-6 are not according to the invention.

### (Example 1)

To a reactor with an internal volume of 5 liters, 0.2 parts of n-dodecylmercaptan and 1.4 parts by mass of potassium rosin acid (disproportionated tall rosin potassium salt, manufactured by Harima Chemicals Group, Inc.), 0.64 parts by mass of sodium hydroxide, 0.4 parts by mass of sodium salt of formaldehyde-naphthalenesulfonic acid condensate and 100 parts by mass of pure water were added with respect to 100 parts by mass of chloroprene monomer. 0.05 part by mass of potassium persulfate was added as a polymerization initiator, and polymerization was carried out at a polymerization temperature of 35°C under a nitrogen stream. When the polymerization conversion reached 65% or more, 0.01 part by mass of thiodiphenylamine was added as a polymerization terminator to terminate the reaction. Unreacted monomers were removed under reduced pressure to obtain a chloroprene-based polymer latex having a solid content of 40%.

### (Examples 2 to 5, Comparative Examples 1 to 4)

Each of the chloroprene-based polymer latex was obtained by the method described in the Examples 1, except that the charged amount of rosin acid and the total amount of sodium hydroxide and potassium hydroxide were as described in Table 1.

### <Generation of Aggregates>

In Comparative Examples 3 and 4, aggregates of 1% by mass or more were generated with respect to 100% by mass of the chloroprene-based polymer from the start to the end of the polymerization reaction. This is probably because, in Comparative Example 3, the emulsification became unstable due to an insufficient amount of rosin acid salt, and in Comparative Example 4, the salt concentration became excessive. In the chloroprene-based polymer latexes of other Examples and Comparative Examples, the amount of aggregates generated from the start to the end of the polymerization reaction was less than 1% by mass with respect to 100% by mass of the chloroprene-based polymer. The aggregates were evaluated by using the total of the dry weight of the residue when the polymerization liquid is filtered through a wire mesh of 80 mesh, and the dry weight of deposits collected from the reactor wall surface, with respect to 100% by mass of the chloroprene-based polymer.

### <Rosin Acid Content in Solid Containing Chloroprene-Based Polymer>

3 g of solid content, which was obtained by freeze-drying the chloroprene-based polymer latex and contained the chloroprene-based polymer, was cut into 2 mm squares, placed in an eggplant flask equipped with a condenser, and rosin acids were extracted with an ethanol-toluene azeotrope mixture (ethanol/toluene volume ratio: 7/3 (ETA)) and measured by gas chromatography. The rosin acids content was determined from the peak area of the rosin component. The results are shown in Table 1.

Gas chromatography was performed under the following measurement conditions.
Column used: FFAP 0.32 mmφ x 25 m (thickness 0.3 µm)
Column temperature: 200°C → 250°C
Temperature increase rate: 10°C/min
Inlet temperature: 270°C
Detector temperature: 270°C
Injection volume: 2 µL

### < Amount of Substance of Alkali Metal Cation in Chloroprene-Based Polymer Latex>

1.0 g of the obtained chloroprene-based polymer latex was acid-decomposed with sulfuric acid and nitric acid and acidified with hydrochloric acid. Potassium ions and sodium ions were quantified using an inductively coupled plasma atomic emission spectrometer (ICP-AES: VISTA-PRO) manufactured by Hitachi High-Tech Science Corporation. Table 1 shows the results.

### <Measurement of Nuclear Magnetic Resonance Analysis (1H-NMR) Spectrum of Chloroprene-Based Polymer>

The chloroprene-based polymer latex was purified with benzene and methanol, freeze-dried, and dissolved in a 5% deuterochloroform solvent, and a 1H- NMR spectrum was measured with JNM-ECX-400 (400 MHz, FT type) manufactured by JEOL Ltd. In the obtained 1H-NMR spectrum, the peak area A at a position of 5.80 to 6.00 ppm, the peak area B at a position of 4.05 to 6.10 ppm, peak area C at a position of 4.15 to 4.20 ppm and a peak area D at a position of 5.40 to 5.60 ppm based on the peak of chloroform in deuterochloroform (7.24 ppm) were measured, and A/B, C/B and D/B were calculated. Table 1 shows the results.

Measurement conditions for nuclear magnetic resonance spectroscopy (1H-NMR) are shown below.
Measurement mode: non-decoupling
Flip angle: 45 degrees
Waiting time: 4.3 seconds
Sample rotation speed: 0 to 12 Hz
Window processing: Exponential function
Accumulation count: 512
Measurement temperature: 30°C

### <Preparing of Adhesive Composition>

50 parts by mass of alkylphenol resin (TAMANOLE 526: manufactured by ARAKAWA CHEMICAL INDUSTRIES, LTD.) and 3 parts by mass of magnesium oxide (Kyowamag #150: manufactured by Kyowa Chemical Industry Co., Ltd.) were dissolved in 120 parts by mass of a solvent of cyclohexane/ethyl acetate = 1:1, and the chelation reaction was carried out at room temperature for 16 hours. Next, to the solution, 100 parts by mass of solid content containing the chloroprene-based polymer, 3 parts by mass of magnesium oxide, 1 part by mass of zinc oxide, 2 parts by mass of dibutylhydroxytoluene, and a solvent of cyclohexane/ethyl acetate = 1:1 were added and the mixture was stirred until the solid content containing the chloroprene-based polymer was completely dissolved to obtain an adhesive. The added amount of the solvent of cyclohexane/ethyl acetate = 1:1 was adjusted so that the resulting solution had a viscosity of 4000 mPa·S.

### <Layer Separation Resistance Test of Adhesive Composition>

The adhesive was placed in a glass container and stored in a constant temperature water bath at 23°C under light shielding. A visual observation of the adhesive was performed and the date, on which separation of the adhesive components, was observed was recorded. The layer separation resistance was evaluated according to the following evaluation criteria.
A: No separation of the adhesive component was observed even after more than 30 days.
B: Separation of the adhesive component was not observed even after more than 20 days, but separation of the adhesive component was observed before more than 30 days.
C: Separation of the adhesive component was observed before more than 20 days.

### <Pot Life Test of Adhesive Composition>

4 parts by mass of an isocyanate curing agent (Desmojur RFE: manufactured by Bayer AG) was added to 100 parts by mass of the adhesive composition, and the viscosity after 10 minutes was taken as the initial viscosity. The pot life was defined as the time from the time when the initial viscosity was measured until the viscosity increased to 1.5 times the initial viscosity. Pot life was evaluated according to the following criteria.
A: The viscosity did not increase even after more than 1500 minutes.
B: The viscosity did not increase in less than 1000 minutes but increased before more than 1500 minutes.
C: The viscosity increases thickened in less than 1000 minutes.

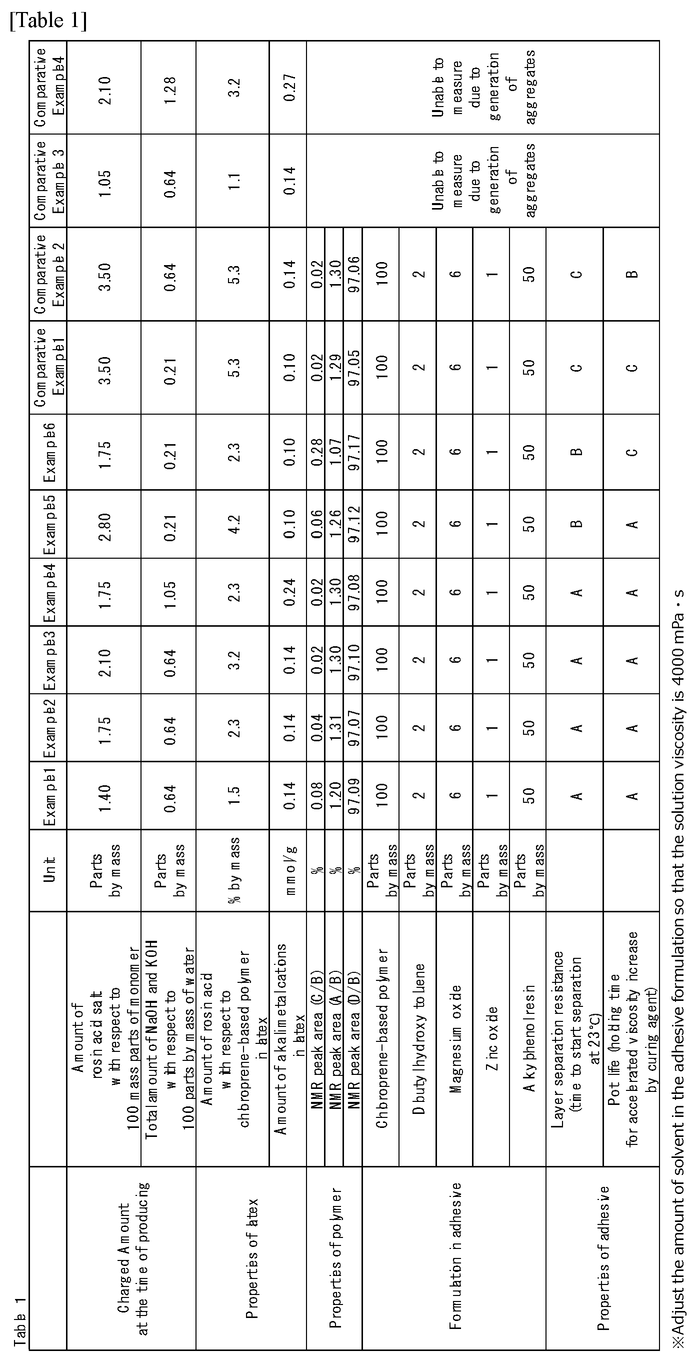

## Claims

1. A chloroprene-based polymer latex comprising a chloroprene-based polymer, wherein:
an amount of substance of alkali metal cation per unit mass in the chloroprene-based polymer latex is 0.12 to 0.25 mmol/g measured by using an inductively coupled plasma atomic emission spectrometer after 1.0 g of the chloroprene-based polymer latex is acid-decomposed with sulfuric acid and nitric acid and acidified with hydrochloric acid,
when the chloroprene-based polymer latex is freeze-dried to obtain a solid content containing the chloroprene-based polymer, and an ethanol-toluene azeotropic mixture soluble content specified in JIS K 6229 is extracted by refluxing from the solid content to obtain an extract, and the obtained extract is acid treated with hydrochloric acid, an amount of rosin acid of in the solid content measured by gas chromatography is 1.4 to 3.2% by mass with respect to 100% by mass of the chloroprene-based polymer in the solid content, and
when the chloroprene-based polymer latex is purified with benzene and methanol, freeze-dried, and dissolved in a 5% deuterochloroform solvent, and a 1H- NMR spectrum is measured with nuclear magnetic resonance analysis,
the 1H-NMR spectrum of the chloroprene-based polymer measured in a deuterochloroform solvent does not have a peak at 4.15 to 4.20 ppm; or
the 1H-NMR spectrum of the chloroprene-based polymer measured in the deuterochloroform solvent has a peak at 4.15 to 4.20 ppm and, wherein an area of the peak at 4.15 to 4.20 ppm is C and the area of the peak at 4.05 to 6.10 ppm is B, C/B is less than 0.10/100.

2. A method of producing the chloroprene-based polymer latex of Claim 1, wherein
the method comprising an emulsion polymerization step,
in the emulsion polymerization step, a monomer including chloroprene monomer is emulsified and polymerized,
1.2 to 2.2 parts by mass of rosin acid salt are used with respect to 100 parts by mass of a total of chloroprene monomer and monomer copolymerizable with chloroprene, and
0.5 to 1.1 parts by mass of a total of sodium hydroxide and potassium hydroxide is used with respect to 100 parts by mass of aqueous medium.

3. A chloroprene-based polymer obtained by drying up the chloroprene-based polymer latex of Claim 1.

4. An adhesive composition comprising the chloroprene-based polymer latex of Claim 1, or the chloroprene-based polymer of Claim 3.

5. A compound composition comprising the chloroprene-based polymer of Claim 3.

6. A vulcanized molded body comprising the compound composition of Claim 5.

## Patentansprüche

1. Chloroprenbasiertes Polymerlatex, das ein chloroprenbasiertes Polymer umfasst, wobei:
eine Substanzmenge an Alkalimetall-Kation pro Masseneinheit in dem chloroprenbasierten Polymerlatex 0,12 bis 0,25 mmol/g beträgt, gemessen unter Verwendung eines Atomemissionsspektrometers mit induktiv gekoppeltem Plasma, nachdem 1,0 g des chloroprenbasierten Polymerlatex mit Schwefelsäure und Salpeteräsure säureabgebaut und mit Chlorwasserstoffsäure angesäuert wurde,
wenn das chloroprenbasierte Polymerlatex gefriergetrocknet wird, um einen Feststoffgehalt zu erhalten, der das chloroprenbasierte Polymer enthält, und ein in einem azeotropen Ethanol-Toluol-Gemisch löslicher Gehalt, spezifiziert in JIS K 6229, durch Erhitzen unter Rückfluss aus dem Feststoffgehalt extrahiert wird, um einen Extrakt zu erhalten, und der erhaltene Extrakt mit Chlorwasserstoffsäure säurebehandelt wird, eine Menge an Harzsäure in dem Feststoffgehalt, gemessen mittels Gaschromatographie, 1,4 bis 3,2 Masse%, bezogen auf 100 Masse% des chloroprenbasierten Polymers in dem Feststoffgehalt, beträgt, und
wenn das chloroprenbasierte Polymerlatex mit Benzol und Methanol gereinigt, gefriergetrocknet und in einem 5%igen Deuterochloroform-Lösungsmittel gelöst wird und mittels Nuklearmagnetresonanzanalyse ein 1H-NMR-Spektrum gemessen wird,
das 1H-NMR-Spektrum des chloroprenbasierten Polymers, gemessen in einem Deuterochloroform-Lösungsmittel, kein Peak bei 4,15 bis 4,20 ppm aufweist; oder
das 1H-NMR-Spektrum des chloroprenbasierten Polymers, gemessen in dem Deuterochloroform-Lösungsmittel, einen Peak bei 4,15 bis 4,20 ppm aufweist und, wobei eine Fläche des Peaks bei 4,15 bis 4,20 ppm C ist und die Fläche des Peaks bei 4,05 bis 6,10 ppm B ist, C/B kleiner als 0,10/100 ist.

2. Verfahren zur Herstellung des chloroprenbasierten Polymerlatex nach Anspruch 1, wobei
das Verfahren einen Emulsionspolymerisationsschritt umfasst,
in dem Emulsionspolymerisationsschritt ein Monomer, das Chloroprenmonomer umfasst, emulgiert und polymerisiert wird,
1,2 bis 2,2 Masseteile an Harzsäuresalz bezogen auf 100 Masseteile einer Gesamtheit an Chloroprenmonomer und Monomer, das mit Chloropren polymierisierbar ist, verwendet werden und
0,5 bis 1,1 Masseteile einer Gesamtheit an Natriumhydroxid und Kaliumhydroxid bezogen auf 100 Masseteile an wässrigem Medium verwendet werden.

3. Chloroprenbasiertes Polymer, das durch Trocknen des chloroprenbasierten Polymerlatex nach Anspruch 1 erhalten wird.

4. Haftmittelzusammensetzung, die das chloroprenbasierte Polymerlatex nach Anspruch 1 oder das chloroprenbasierte Polymer nach Anspruch 3 umfasst.

5. Verbindungszusammensetzung, die das chloroprenbasierte Polymer nach Anspruch 3 umfasst.

6. Vulkanisierter Formkörper, der die Verbindungszusammensetzung nach Anspruch 5 umfasst.

## Revendications

1. Latex de polymère à base de chloroprène comprenant un polymère à base de chloroprène, dans lequel :
une quantité de substance de cation de métal alcalin par unité de masse dans le latex de polymère à base de chloroprène est de 0,12 à 0,25 mmol/g, mesurée à l'aide d'un spectromètre d'émission atomique à plasma à couplage inductif après que 1,0 g du latex de polymère à base de chloroprène a été décomposé à l'acide avec de l'acide sulfurique et de l'acide nitrique et acidifié avec de l'acide chlorhydrique,
lorsque le latex de polymère à base de chloroprène est lyophilisé pour obtenir un contenu solide contenant le polymère à base de chloroprène, et qu'un contenu soluble dans un mélange azéotropique éthanol-toluène spécifié dans la norme JIS K 6229 est extrait par reflux du contenu solide pour obtenir un extrait, et que l'extrait obtenu est traité à l'acide avec de l'acide chlorhydrique, une quantité d'acide colophane dans le contenu solide mesurée par chromatographie en phase gazeuse est de 1,4 à 3,2 % en masse par rapport à 100 % en masse du polymère à base de chloroprène dans le contenu solide, et
lorsque le latex de polymère à base de chloroprène est purifié avec du benzène et du méthanol, lyophilisé et dissous dans un solvant deutérochloroforme à 5 %, et qu'un spectre RMN-1H est mesuré par analyse de résonance magnétique nucléaire,
le spectre RMN-1H du polymère à base de chloroprène mesuré dans un solvant deutérochloroforme ne présente pas de pic situé de 4,15 à 4,20 ppm ; ou
le spectre RMN-1H du polymère à base de chloroprène mesuré dans le solvant deutérochloroforme présente un pic situé de 4,15 à 4,20 ppm et, dans lequel une surface du pic situé de 4,15 à 4,20 ppm est C et la surface du pic situé de 4,05 à 6,10 ppm est B, C/B est inférieur à 0,10/100.

2. Procédé de production du latex de polymère à base de chloroprène selon la revendication 1, dans lequel
le procédé comprend une étape de polymérisation en émulsion,
dans l'étape de polymérisation en émulsion, un monomère incluant un monomère de chloroprène est émulsifié et polymérisé,
1,2 à 2,2 parties en masse de sel d'acide colophane sont utilisées par rapport à 100 parties en masse d'un total de monomère de chloroprène et de monomère copolymérisable avec le chloroprène, et
0,5 à 1,1 partie en masse d'un total d'hydroxyde de sodium et d'hydroxyde de potassium est utilisée par rapport à 100 parties en masse de milieu aqueux.

3. Polymère à base de chloroprène obtenu par séchage du latex de polymère à base de chloroprène selon la revendication 1.

4. Composition adhésive comprenant le latex de polymère à base de chloroprène selon la revendication 1, ou le polymère à base de chloroprène selon la revendication 3.

5. Composition de composés comprenant le polymère à base de chloroprène selon la revendication 3.

6. Corps moulé vulcanisé comprenant la composition de composés selon la revendication 5.
